# EUROPÄISCHE PATENTSCHRIFT

(11) **EP 0 779 178 B1**
(45) Veröffentlichungstag und Bekanntmachung des Hinweises auf die Patenterteilung: **03.05.2000**
(21) Anmeldenummer: 96120051.6
(22) Anmeldetag: 13.12.1996
(51) Int. Cl.: B60N 3/10

(54) **Vorrichtung in der Form einer Kassette zur Aufnahme/Halterung von Behältnissen**
Device in the form of a cassette for receiving/holding containers
Dispositif en forme d'une cassette pour recevoir/tenir des récipients

(30) Priorität: 15.12.1995 CH 356495
(43) Veröffentlichungstag der Anmeldung: 18.06.1997
(73) Patentinhaber: Sarnatech Paulmann & Crone GmbH, 58511 Lüdenscheid (DE)
(72) Erfinder: Schaefer, Stefan, 51709 Marienheide (DE); Rudek, Paul Franz, 58097 Hagen (DE)
(74) Vertreter: Zink-Wild, Markus Peter

(56) Entgegenhaltungen:
- US-A- 4 953 771
- US-A- 4 981 277
- US-A- 5 024 411
- US-A- 5 284 314
- US-A- 5 289 962

## Beschreibung

Die vorliegende Erfindung betrifft eine Vorrichtung in der Form einer Kassette zur Aufnahme/Halterung von Behältnissen.

Die bekannten Trinkbecherhalter, sogenannte Cupholder, haben den grossen Nachteil, dass sie viel Platz beanspruchen und deswegen in Fahrzeugen, wie beispielsweise Autos, Boote, Flugzeuge, äusserlich an einer Armatur angebracht werden.

Dies hat den weiteren Nachteil, dass diese Cupholder nicht verstaut werden können und somit immer sichtbar bleiben und somit nicht im Einklang zum Gesamterscheinungsbild des Fahrzeuginnenraumes stehen.

Andere Cupholder, welche in eine Konsole oder Schalttafel integriert werden können, benötigen ebenfalls viel Platz und können wegen Platzmangel nicht in ergonomischer Reichweite der Fahrzeuginsassen, insbesondere des Fahrzeugführers, installiert werden, weil wichtige Funktionen im Zusammenhang mit der Sicherheit bevorzugt in ergonomischer Reichweite angebracht werden.

In der US PS 4 981 277 wird ein Cupholder beschrieben, welcher eine mittige Führung aufweist. Ein beweglicher Teil wird durch Plattfedern zentriert und kraftschlüssig mit den Führungsflächen in Kontakt gehalten.

Dieser Cupholder hat eine relativ hohe Bauhöhe.

In nicht voll ausgezogenen Positionen besteht mangels unvollständigem Anliegen des Behälterumfanges an den Aufnahmeoberflächen die Gefahr des Kippens des Behälters.

Dieser Cupholder muss zwingend einen Boden zum Abstützen des Gefässes oder Behälters haben.

Dieser Cupholder dürfte auch schlecht zu reinigen sein.

Die beiden Arme des Cupholders sind je nur an einem Drehpunkt gelagert, was enorme Nachteile betreffend der Stabilität mit sich bringt.

Eine manuelle Betätigung mit "push"-Betrieb ist hier nicht vorgesehen.

In der US PS 4 953 771 wird ein Cupholder beschrieben, welcher eine spezielle seitliche U-Führung mit wenig Spielraum für Toleranzen aufweist. Dieser Cupholder liegt in geschlossener Kassettenform vor.

Die beiden Armteile sind zentral in einem einzigen Drehpunkt gelagert und mittels Federkraft vorgespannt.

Im ausgezogenen Zustand haben diese beiden Armteile Niveau-Unterschiede, was optisch als sehr störend empfunden wird und ein schlechtes Design darstellt.

Ein Bügel mit zwei Trägerteilen, auf denen die Behälter abgestützt werden, ist zwingend vorgesehen.

Die Oeffnungen für die Aufnahme eines Behälters haben einen fixen Durchmesser und sind dadurch nur für eine einzige im voraus bestimmte Behältergrösse voll funktionsfähig.

Wenn kleinere Behälter eingeführt werden, dann besteht die akute Gefahr des Durchrutschens und des Kippens des Behälters.

Eine manuelle Betätigung mit "push"-Betrieb ist hier nicht vorgesehen.

In der US PS 5 289 962 wird ein weiterer Cupholder beschrieben, welcher mittels Telescop-Transport und "push"-Betrieb betrieben wird.

Diese Cupholder-Vorrichtung benötigt eine enorme Bauhöhe und einen enormen Bauraum, und ist deshalb kaum für den Einbau in ein Armaturenbrett geeignet.

Dieser Cupholder ist aus sehr vielen Einzelteilen zusammengesetzt.

Dies resultiert in einem grossen Montageaufwand und bewirkt im Endeffekt hohe Kosten, und ist entsprechend anfällig gegenüber Störungen.

Weil dieser Cupholder keine Kassettenbauweise aufweist, muss er zum vornherein in das Fahrzeug integriert sein.

Wegen der aufwendigen Bauweise ist dieser Cupholder nicht gut zu reinigen.

In der US PS 5 284 314 wird ein Cupholder beschrieben, welcher mittels "push"-Betrieb und Federwirkung betrieben wird.

Auch diese Cupholder-Vorrichtung benötigt eine enorme Bauhöhe und einen enormen Bauraum, und ist deshalb kaum für den Einbau in ein Armaturenbrett geeignet.

Dieser Cupholder ist aus sehr vielen Einzelteilen zusammengesetzt.

Dies resultiert in einem grossen Montageaufwand und bewirkt im Endeffekt hohe Kosten, und ist entsprechend anfällig gegenüber Störungen.

Die Armteile werden mittels Führungsschienen und Führungsstiften zwischen der Ausgangsposition und der Endposition bewegt.

Insbesondere offenbart die US-A-4953771, die als nächstliegender Stand der Technik betrachtet wird, eine Vorrichtung in der Form einer Kassette zur Aufnahme/Halterung von Behältnissen, insbesondere Flaschen, Dosen, Becher, Gläser, wobei
- ein als Träger ausgebildetes erstes Element (46) an ein als Gleiter ausgebildetes zweites Element (32) befestigt ist,
- das genannte erste Element (46) und das genannte zweite Element (32) in ein als Gehäuse ausgebildetes drittes Element (23) einfahrbar oder einführbar sowie aus diesem dritten Element (23) ausfahrbar oder ausführbar sind,
- dieses erste Element (46) einen Frontbereich (66), auch Bedienungs/Abdeckbereich genannt, aufweist,
- in diesem Frontbereich (66) vordere Führungselemente (126) vorhanden sind,
- ein oder zwei Arm(e) (90) in den vorderen Führungselementen (126) einseitig geführt werden,
- wobei bei dieser einseitigen Führung dieser Arme (90) der nicht geführte Endbereich (86,88) des betreffenden Armes (90) drehbar im ersten Element (46) gelagert ist,
- wobei bei dieser einseitigen Führung jeder dieser Arme (90) mit einer solchen am ersten Element (46) befestigten Feder (102) verbunden ist, welche das vollständige Ausschwenken des betreffenden Armes (90) bewirkt, und wobei
- das genannte zweite Element (32) und das genannte dritte Element (23) aufeinander abgestimmte, seitliche Führungselemente (36,48) und aufeinander abgestimmte Arretierungsstellen (55) aufweisen.

Es ist ein Ziel der vorliegenden Erfindung, einen Cupholder zur Verfügung zu stellen, welcher wenig Platz beansprucht und in ergonomischer Reichweite der Fahrzeuginsassen in der Armatur, in der Mittelkonsole oder in der Verlängerung der Mittelkonsole verstaut werden kann und sich harmonisch ins Gesamterscheinungsbild des Fahrzeuginnenraumes integriert.

Dieser Cupholder soll mittels herkömmlicher Technik in kostengünstiger und einfacher Herstellungsweise produziert werden können, und soll deshalb aus wenigen, voll funktionsfähigen Einzelteilen bestehen.

Dieser Cupholder soll ausserdem stabil und leicht zu reinigen sein und betriebssicher funktionieren.

Ausserdem soll er bei der Herstellung des Fahrzeuges oder auf Wunsch des Fahrzeughalters nachträglich in einen dafür vorgesehenen Bauraum in den oben genannten Stellen eingebaut werden können.

Dieser Cupholder soll insbesondere durch den Fahrzeugführer derart in Betrieb genommen und nach Gebrauch wieder ausser Betrieb gesetzt werden können, dass er in seiner Aufmerksamkeit auf den jeweiligen Verkehr weder gestört noch abgelenkt wird.

Dieser Cupholder soll überall eingebaut werden können und soll vorzugsweise ohne Fremdenergie, wie elektrischer Strom, funktionieren.

Eine teilweise manuelle Betätigung wird dabei nicht als Fremdenergie angesehen.

Alle oben erwähnten Ziele werden mit der erfindungsgemässen Vorrichtung erreicht.

Die erfindungsgemässe Vorrichtung in der Form einer Kassette zur Aufnahme/Halterung von Behältnissen, insbesondere Flaschen, Dosen, Becher, Gläser, ist dadurch gekennzeichnet, dass
- ein als Träger ausgebildetes erstes Element 1 in montierbarer und demontierbarer Weise an ein als Gleiter ausgebildetes zweites Element 2 befestigt ist,
- das genannte erste Element 1 und das genannte zweite Element 2 in montierter Form in ein als Gehäuse ausgebildetes drittes Element 3 einfahrbar oder einführbar sowie aus diesem dritten Element 3 ausfahrbar oder ausführbar sind,
- dieses erste Element 1 einen Frontbereich 4, auch Bedienungs-/Abdeckbereich genannt, aufweist,
- entweder in diesem Frontbereich 4 vordere Führungselemente 5 und/oder auf der diesem Frontbereich 4 gegenüberliegenden Seite 6, dem sogenannten hinteren Bereich, hintere Führungselemente 7 vorhanden sind,
- ein oder zwei Arm(e) 8 entweder in den vorderen Führungselementen 5 oder in den hinteren Führungselementen 7 einseitig geführt werden, oder gleichzeitig in den vorderen Führungselementen 5 und in den hinteren Führungselementen 7 beidseitig geführt werden,
- wobei bei einseitiger Führung dieser Arme 8 der nicht geführte Endbereich 9 des betreffenden Armes 8 drehbar im ersten Element 1 gelagert ist,
- wobei bei einseitiger Führung jeder dieser Arme 8 mit einer solchen am ersten Element 1 befestigten Feder 10 verbunden ist, welche das vollständige Ausschwenken des betreffenden Armes 8 bewirkt,
- wobei bei einseitiger Führung jeder dieser Arme 8 in einem ersten Teilbereich 11 als Anschlag ausgebildet ist, welcher als Begrenzungskontur dient, und wobei dieser Anschlag ein entsprechend abgestimmtes Gegenstück 12 im jeweiligen Endbereich des betreffenden Führungselementes 5,7 hat,
- wobei bei beidseitiger Führung die Arme 8 von einem Grenzbereich 13 aus, welcher senkrecht zum Frontbereich 4 und senkrecht zum hinteren Bereich 6 steht, mittels Federkraft innerhalb der Führungselemente 5,7 weggedrückt werden,
- wobei bei beidseitiger Führung beide Enden dieser Arme 8 als Anschläge ausgebildet sind, welche als Begrenzungskontur dienen, und wobei diese Anschläge entsprechend abgestimmte Gegenstücke 12 im jeweiligen Endbereich des betreffenden Führungselementes 5,7 haben,
- an das erste Element 1 oder an das zweite Element 2 entweder eine Kulisse 14, auch Herzkurve genannt, oder ein Umlenkhebel 15, auch Kulissenstift genannt, oder eine Scheibe 16 mit Nocken, fixiert ist, oder im ersten Element 1 oder im zweiten Element 2 eine Kulisse 14 oder ein Umlenkhebel 15 oder eine Scheibe 16 mit Nocken drehbar gelagert ist,
- das erste Element 1 in ausgefahrener oder ausgeführter Stellung zusammen mit den vollständig ausgeschwenkten Armen 8 die Aufnahme- und Halterungsbereiche 17 für die genannten Behältnisse bildet,
- das genannte zweite Element 2 und das genannte dritte Element 3 aufeinander abgestimmte, seitliche Führungselemente 18, 18a und aufeinander abgestimmte Arretierungsstellen 19, 19a aufweisen,
- an das dritte Element 3 entweder ein Umlenkhebel 20 oder eine Kulisse 21 oder eine Scheibe 22 mit Nocken drehbar gelagert ist, oder im dritten Element 3 ein Umlenkhebel 20 oder eine Kulisse 21 oder eine Scheibe 22 mit Nocken fixiert ist, wobei der jeweilige Umlenkhebel 15,20 oder der jeweilige Nocken in der Scheibe 16,22 in die jeweilige Kulisse 21,14 eingreift, und wobei der Schwenkbereich des jeweiligen Umlenkhebels 15,20 oder des jeweiligen Nockens in der Scheibe 16,22 in Abstimmung auf die jeweilige Oeffnung in der Kulisse 21,14 begrenzt ist, und
- an das dritte Element 3 eine solche Feder 23 befestigt ist, welche das vollständige oder teilweise Ausfahren oder Ausführen der aneinander montierten ersten und zweiten Elemente 1, 2 bewirkt.

Bevorzugte Ausführungsformen der erfindungsgemässen Vorrichtung sind in den abhängigen Ansprüchen definiert.

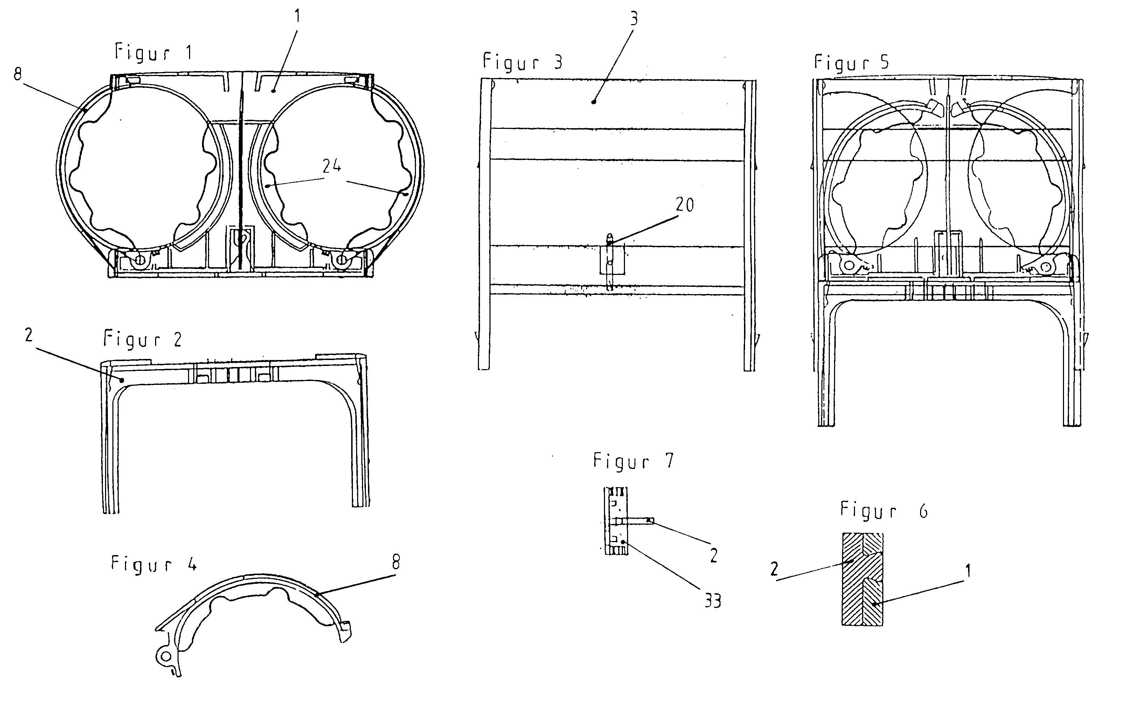

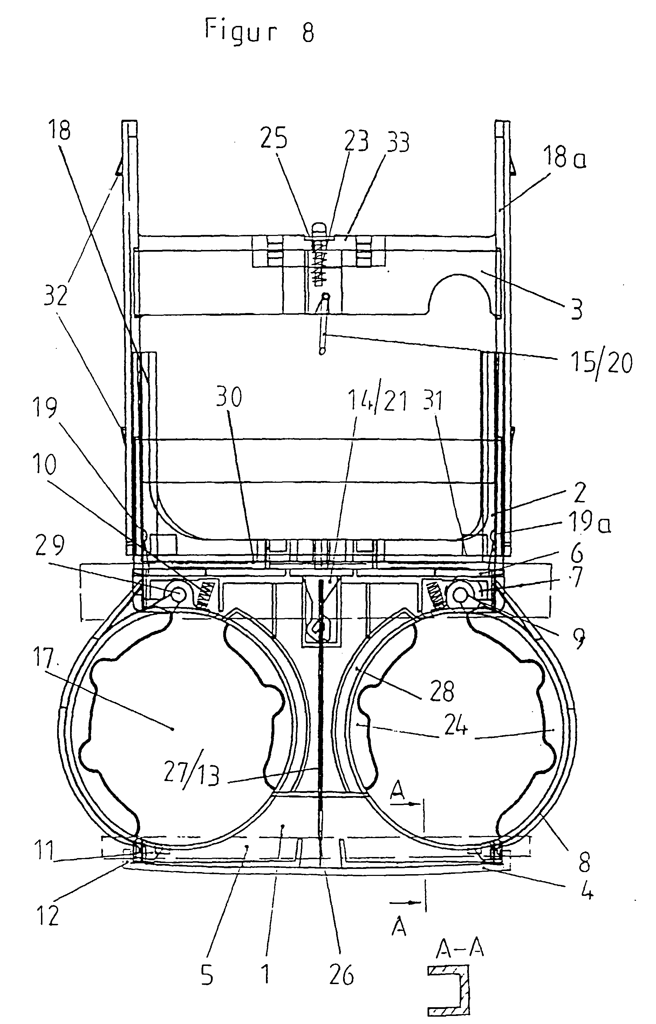

Im folgenden Teil werden unter Bezugnahme auf die Figuren 1 bis 8 mögliche Ausführungsformen der erfindungsgemässen Vorrichtung beschrieben.

Figur 1 zeigt von der Rückseite her betrachtet und in teilweise aufgeschnittener Form rein schematisch das erste Element 1 mit vollständig ausgeschwenkten Armen 8.

Figur 2 zeigt von der Rückseite her betrachtet rein schematisch das zweite Element 2.

Figur 3 zeigt von der Rückseite her betrachtet rein schematisch das dritte Element 3.

Figur 4 zeigt in der Draufsicht rein schematisch einen Arm 8.

Figur 5 zeigt in der Draufsicht rein schematisch die Elemente 1, 2, 3 in eingefahrener oder eingeführter Position.

Figur 6 zeigt einen Schnitt durch eine "Schwalbenschwanz"-Führung.

Figur 7 zeigt eine Federaufnahme 33.

Figur 8 zeigt in der Draufsicht eine erfindungsgemässe Vorrichtung in ausgefahrener oder ausgeführter Position.

Dabei werden Ausführungsformen, wie sie in den abhängigen Ansprüchen definiert sind, normalerweise nicht wiederholt.

Die erfindungsgemässe Vorrichtung kann unter Berücksichtigung des wirtschaftlichen Aspektes und der Machbarkeit aus jedem geeigneten Material gemäss vorgegebenen Anforderungen, wie zum Beispiel Beständigkeit im Gebrauchstemperaturbereich, insbesondere von - 40°C bis + 90°C, hergestellt sein.

Geeignete Materialien sind beispielsweise Kunststoffe, wie modifizierte Polypropylene, Acrylnitril-Butadien-Styrol-Polymere (ABS), oder Metalle und Legierungen davon, wie etwa Aluminium, Blech.

Das erste Element 1 hat folgende Dimensionen: 130 mm x 105 mm x 2,5 mm bis 12 mm.

Es weist zwei Aufnahme- und Halterungsbereiche 17 auf.

Diese Aufnahme- und Halterungsbereiche 17 haben je einen Durchmesser von etwa 80 mm.

Die beiden Stellen 28 im ersten Element 1 und die nach innen gerichteten Seiten der beiden Arme 8 sind mit elastischen Lippen 24 ausgerüstet.

Die beiden vorderen Führungselemente 5 sind als Führungstaschen ausgebildet.

In den Endbereichen dieser vorderen Führungselemente 5 sind am Frontbereich 4 zwei als Anschläge ausgebildete Gegenstücke 12 angebracht.

Die ersten Teilbereiche 11 der Arme 8 sind ebenfalls als Anschläge ausgebildet, welche als Begrenzungskontur dienen.

Somit ist die kontrollierte Bewegung der ersten Teilbereiche 11 der Arme 8 in diesen Führungstaschen 5 gewährleistet.

Die Arme 8 haben eine ovale Form und sind im hinteren Bereich 6 drehbar gelagert.

Die beiden Arme 8 drehen sich dabei je um einen als Welle, Zapfen oder Stift ausgebildeten Drehpunkt 29.

Diese Arme 8 sind je mit einer am ersten Element 1 befestigten Druckfeder 10 verbunden, welche das vollständige Ausschwenken des betreffenden Armes 8 bewirkt.

Die Distanz zwischen dem ersten Teilbereich 11 des Armes 8 und dem Drehpunkt 29 beträgt etwa 90 mm.

Das erste Element 1 weist im Sichtbereich des Grenzbereiches 13 einen Gleitsteg 26 auf.

Das erste Element 1 weist im unsichtbaren Bereich, also auf der Rückseite, des Grenzbereiches 13 eine Stabilisierungsrippe 27 auf.

An das erste Element 1 ist im unsichtbaren Bereich des Grenzbereiches 13 und in der Nähe des hinteren Bereiches 6 eine erste Kulisse 14 fixiert.

Diese Kulisse 14 ist in Richtung des hinteren Bereiches 6 offen.

Das erste Element 1 ist im Bereich des hinteren Bereiches 6 mit der Frontseite 30 des zweiten Elementes 2 mittels einer sogenannten "Schwalbenschwanz"-Führung in montierbarer und demontierbarer Weise verbunden.

Das zweite Element 2 hat folgende Dimensionen: 130 mm x 75 mm bis 120 mm x 2,5 mm bis 12 mm.

Das zweite Element 2 ist U-förmig ausgebildet, was den Vorteil hat, dass relativ viel Freiraum zur Verfügung steht, welcher für die Montage, speziell bei einer Montage in der Mittelkonsole, benutzt werden kann.

Die beiden Schenkel dieses U-förmigen zweiten Elementes 2 bilden die seitlichen Führungselemente 18, welche je ein U-förmiges Profil aufweisen.

An diesen beiden Schenkeln sind in der Nähe der Frontseite 30 des zweiten Elementes 2 je eine Arretierungsstelle 19 vorhanden, welche als Wölbungen oder als Kugelraste ausgebildet sind.

Das dritte Element 3 ist als Gehäuse ausgebildet und kann das erste Element 1 und das zweite Element 2 aufnehmen.

Das dritte Element 3 hat folgende Dimensionen: 150 mm x 135 mm x 16 mm.

Am dritten Element 3 befinden sich seitlich angeordnet die beiden seitlichen Führungselemente 18 a, welche ebenfalls ein U-förmiges Profil haben und auf die entsprechenden am zweiten Element 2 vorhandenen Führungselemente 18 abgestimmt sind.

In der Nähe der Frontseite des dritten Elementes 3 sind seitlich in den beiden Führungselementen 18 a je eine Arretierungsstelle 19 a vorhanden, welche auf die entsprechenden am zweiten Element 2 vorhandenen Arretierungsstellen 19 abgestimmt sind.

Auf der Aussenseite der Führungselemente 18 a können Arretierungsnasen 32 vorhanden sein, welche die Lage des dritten Elementes 3 in beispielsweise der Verlängerung der Mittelkonsole in einem Automobil bestimmen.

Im hinteren Bereich des dritten Elementes 3 ist auf der Unterseite ein drehbar gelagerter zweiter Umlenkhebel 20 vorhanden.

In eingefahrener oder eingeführter Position der Elemente 1, 2 greift der Umlenkhebel 20 in die erste Kulisse 14 ein.

In Abstimmung auf die jeweilige Oeffnung in der Kulisse 14 ist der Schwenkbereich des Umlenkhebels 20 entsprechend begrenzt.

Im hinteren Bereich des dritten Elementes 3 ist mittig eine Federaufnahme 33 angebracht.

Diese Federaufnahme 33 hat folgende Dimensionen: 34 mm x 11 mm x 2,5 mm.

Diese Federaufnahme 33 weist einen Stift 25 auf, welcher eine Druckfeder 23 führt.

Diese Druckfeder 23 bewirkt, dass bei entsprechender Entriegelung die aneinander montierten ersten und zweiten Elemente 1, 2 ausgefahren oder ausgeführt werden.

Ein in ein Fahrzeug eingebauter erfindungsgemässer Cupholder wird wie folgt in Betrieb genommen:

Durch push-Betrieb, beziehungsweise Eindrücken der Abdeckkappe 4 mit den daran fixierten Teilen in Richtung hinterer Bereich 6, wird die erfindungsgemässe Vorrichtung in der Kulisse 14 entriegelt, und durch die Kraft der Druckfeder 23 wird die Abdeckkappe 4 mit den daran fixierten Teilen in entgegengesetzter Richtung bewegt.

Anschliessend werden die aneinander montierten Elemente 1, 2 manuell in die Endposition herausgezogen.

Dabei schwenken die Arme 8 durch die Kraft der Federn 10 automatisch bis zum Anschlag aus.

Diese Endposition wird durch die an den Elementen 1, 2 vorhandenen Arretierungsstellen 19, 19 a bestimmt.

Damit ist die erfindungsgemässe Vorrichtung betriebsbereit.

Bei Nichtbedarf wird die erfindungsgemässe Vorrichtung wie folgt in die Ausgangsposition zurückgeführt:

Die Behältnisse werden entfernt. Dann wird die Abdeckkappe 4 mit den daran fixierten Teilen in Richtung hinterer Bereich 6 so lange geschoben, bis die erfindungsgemässe Vorrichtung in der Kulisse 14 verriegelt wird.

Beim Berühren der Führungselemente 18 a am dritten Element 3 schwenken die Arme 8 automatisch ein.

Das erste Element 1 und das zweite Element 2 sind deshalb in montierbarer und demontierbarer Form miteinander verbunden, um im Falle einer Fehlmanipulation eine Beschädigung der erfindungsgemässen Vorrichtung zu vermeiden.

Wenn in ausgefahrener oder ausgeführter Position eine unkontrollierte Krafteinwirkung von oben oder von unten erfolgt, dann werden das erste Element 1 und das zweite Element 2 an der Stelle gezielt und kontrolliert voneinander getrennt, an welcher sich die bevorzugte "Schwalbenschwanz"-Führung befindet.

Die so voneinander getrennten Elemente 1, 2 können wieder aneinander montiert werden, indem sie seitlich ineinander entlang der "Schwalbenschwanz"-Führung bis zur entsprechenden Arretierung gestossen werden.

Es ist auch möglich, die erfindungsgemässe Vorrichtung in der Art und Weise abzuwandeln, dass sich zwischen den Aufnahme- und Halterungsbereichen 17 weitere vollständig ausgeformte Aufnahme- und Halterungsbereiche befinden.

Die erfindungsgemässe Vorrichtung ist vorzugsweise in einem Fahrzeug an einem solchen Ort zu plazieren, dass man das eingesetzte Behältnis noch auf einem Untergrund abstützen kann.

In der vorlieghenden Erfindung werden die folgenden Bezugszeichen verwendet:
- 1: erstes Element
- 2: zweites Element
- 3: drittes Element
- 4: Frontbereich
- 5: vordere Führungselemente
- 6: gegenüberliegende Seite zum Frontbereich 4, auch hinterer Bereich genannt
- 7: hintere Führungselemente
- 8: Arm
- 9: nicht geführter Endbereich des Armes 8
- 10: Feder
- 11: erster Teilbereich des Armes 8
- 12: Gegenstück
- 13: Grenzbereich
- 14: Kulisse
- 15: Umlenkhebel
- 16: Scheibe mit Nocken
- 17: Aufnahme- und Halterungsbereich
- 18,18a: Führungselemente
- 19,19a: Arretierungsstellen
- 20: Umlenkhebel
- 21: Kulisse
- 22: Scheibe mit Nocken
- 23: Feder
- 24: elastische Lippen
- 25: Stift
- 26: Gleitsteg
- 27: Stabilisierungsrippe
- 28: Stellen im ersten Element 1
- 29: Drehpunkt
- 30: Frontseite des zweiten Elementes 2
- 31: Frontseite des dritten Elementes 3
- 32: Arretierungsnasen
- 33: Federaufnahme.

## Patentansprüche

1. Vorrichtung in der Form einer Kassette zur Aufnahme/Halterung von Behältnissen, insbesondere Flaschen, Dosen, Becher, Gläser, wobei
- ein als Träger ausgebildetes erstes Element (1) in montierbarer und demontierbarer Weise an ein als Gleiter ausgebildetes zweites Element (2) befestigt ist,
- das genannte erste Element (1) und das genannte zweite Element (2) in montierter Form in ein als Gehäuse ausgebildetes drittes Element (3) einfahrbar oder einführbar sowie aus diesem dritten Element (3) ausfahrbar oder ausführbar sind,
- dieses erste Element (1) einen Frontbereich (4), auch Bedienungs-/Abdeckbereich genannt, aufweist,
- entweder in diesem Frontbereich (4) vordere Führungselemente (5) und/oder auf der diesem Frontbereich (4) gegenüberliegenden Seite (6), dem sogenannten hinteren Bereich, hintere Führungselemente (7) vorhanden sind,
- ein oder zwei Arm(e) (8) entweder in den vorderen Führungselementen (5) oder in den hinteren Führungselementen (7) einseitig geführt werden, oder gleichzeitig in den vorderen Führungselementen (5) und in den hinteren Führungselementen (7) beidseitig geführt werden,
- wobei bei einseitiger Führung dieser Arme (8) der nicht geführte Endbereich (9) des betreffenden Armes (8) drehbar im ersten Element (1) gelagert ist,
- wobei bei einseitiger Führung jeder dieser Arme (8) mit einer solchen am ersten Element (1) befestigten Feder (10) verbunden ist, welche das vollständige Ausschwenken des betreffenden Armes (8) bewirkt,
- wobei bei einseitiger Führung jeder dieser Arme (8) in einem ersten Teilbereich (11) als Anschlag ausgebildet ist, welcher als Begrenzungskontur dient, und wobei dieser Anschlag ein entsprechend abgestimmtes Gegenstück (12) im jeweiligen Endbereich des betreffenden Führungselementes (5,7) hat,
- wobei bei beidseitiger Führung die Arme (8) von einem Grenzbereich (13) aus, welcher senkrecht zum Frontbereich (4) und senkrecht zum hinteren Bereich (6) steht, mittels Federkraft innerhalb der Führungselemente (5,7) weggedrückt werden,
- wobei bei beidseitiger Führung beide Enden dieser Arme (8) als Anschläge ausgebildet sind, welche als Begrenzungskontur dienen, und wobei diese Anschläge entsprechend abgestimmte Gegenstücke (12) im jeweiligen Endbereich des betreffenden Führungselementes (5,7) haben,
- an das erste Element (1) oder an das zweite Element (2) entweder eine Kulisse (14), auch Herzkurve genannt, oder ein Umlenkhebel (15), auch Kulissenstift genannt, oder eine Scheibe (16) mit Nocken, fixiert ist, oder im ersten Element (1) oder im zweiten Element (2) eine Kulisse (14) oder ein Umlenkhebel (15) oder eine Scheibe (16) mit Nocken drehbar gelagert ist,
- das erste Element (1) in ausgefahrener oder ausgeführter Stellung zusammen mit den vollständig ausgeschwenkten Armen (8) die Aufnahme- und Halterungsbereiche (17) für die genannten Behältnisse bildet,
- das genannte zweite Element (2) und das genannte dritte Element (3) aufeinander abgestimmte, seitliche Führungselemente (18, 18a) und aufeinander abgestimmte Arretierungsstellen (19, 19a) aufweisen,
- an das dritte Element (3) entweder ein Umlenkhebel (20) oder eine Kulisse (21) oder eine Scheibe (22) mit Nocken drehbar gelagert ist, oder im dritten Element (3) ein Umlenkhebel (20) oder eine Kulisse (21) oder eine Scheibe (22) mit Nocken fixiert ist, wobei der jeweilige Umlenkhebel (15;20) oder der jeweilige Nocken in der Scheibe (16;22) in die jeweilige Kulisse (21;14) eingreift, und wobei der Schwenkbereich des jeweiligen Umlenkhebels (15;20) oder des jeweiligen Nockens in der Scheibe (16; 22) in Abstimmung auf die jeweilige Oeffnung in der Kulisse (21;14) begrenzt ist, und
- an das dritte Element (3) eine solche Feder (23) befestigt ist, welche das vollständige oder teilweise Ausfahren oder Ausführen der aneinander montierten ersten und zweiten Elemente (1, 2) bewirkt.

2. Vorrichtung nach Anspruch 1, dadurch gekennzeichnet, dass das erste Element (1) mit dem zweiten Element (2) mittels eines Profils verbunden ist, insbesondere ein führbares Profil mit Arretierungsanschlag, vorzugsweise eine sogenannte "Schwalbenschwanz"-Führung.

3. Vorrichtung nach einem der Ansprüche 1 bis 2, dadurch gekennzeichnet, dass der Frontbereich (4) als Blende oder Abdeckkappe ausgebildet ist.

4. Vorrichtung nach einem der Ansprüche 1 bis 3, dadurch gekennzeichnet, dass die vorderen Führungselemente (5) und/oder die hinteren Führungselemente (7) als Führungstaschen ausgebildet sind.

5. Vorrichtung nach einem der Ansprüche 1 bis 4, dadurch gekennzeichnet, dass die Arme (8) eine ovale Kontur aufweisen, und vorzugsweise auf der nach innen gerichteten Seite, einschliesslich die entsprechenden Stellen (28) im ersten Element (1), mit elastischen Lippen (24) ausgerüstet sind.

6. Vorrichtung nach einem der Ansprüche 1 bis 5, dadurch gekennzeichnet, dass die genannten drehbaren Lagerungen mittels Bolzen, Zapfen oder Wellen erfolgen.

7. Vorrichtung nach einem der Ansprüche 1 bis 6, dadurch gekennzeichnet, dass die Federn (10) Druck- oder Schenkelfedern sind.

8. Vorrichtung nach einem der Ansprüche 1 bis 7, dadurch gekennzeichnet, dass die Führungselemente (18) im zweiten Element (2) und im dritten Element (3) aufeinander abgestimmte Führungsprofile sind.

9. Vorrichtung nach einem der Ansprüche 1 bis 8, dadurch gekennzeichnet, dass die Feder (23) eine Druckfeder ist, welche vorzugsweise mittels eines Stiftes (25) geführt wird, wobei eine solche Druckfeder bevorzugt ist, welche das vollständige Ausfahren oder Ausführen der aneinander montierten ersten und zweiten Elemente (1, 2) ermöglicht.

10. Vorrichtung nach einem der Ansprüche 1 bis 9, dadurch gekennzeichnet, dass das erste Element (1) wenigstens einen Gleitsteg (26) im Sichtbereich und/oder wenigstens eine Stabilisierungsrippe (27) im unsichtbaren Bereich, auch Rückseite genannt, aufweist, wobei diese Gleitstege (26) und Stabilisierungsrippen (27) in Richtung der Funktion ausgelegt sind.

## Claims

1. Device in the shape of a cassette for the receipt/holding of receptacles, specifically bottles, cans, cups, glasses, whereby
- a first element (1) designed as carrier is connected in a mountable and dismountable manner to a second element (2) structured as a slide,
- the said first element (1) and the said second element (2) in their mounted state are slideable or insertable into a third element (3) structured as a housing and slideable or retrievable out of this third element (3),
- this first element (1) includes a front area (4), also termed manipulation/covering area,
- either front guiding elements (5) are present in this front area (4) and/or rear guiding elements (7) are present on the side (6) opposite of this front area (4), the so called rear area,
- one or two arm(s) (8) is(are) guided one-sided either in the front guiding elements (5) or in the rear guiding elements (7), or simultaneously at both sides in the front guiding elements (5) and in the rear guiding elements (7),
- whereby in case of a one-sided guiding of these arms (8) the not guided end area (9) of the corresponding arm (8) is mounted for rotation in the first element (1),
- whereby in case of a one-sided guiding each of these arms (8) is connected to such a spring (10) mounted to the first element (1), which causes the complete swinging out of the corresponding arm (8),
- whereby in case of a one-sided guiding each of these arms (8) is designed in a first part area (11) as an abutment which serves as a limiting contour, and whereby this abutment has a matching designed counter piece (12) in the respective end area of the corresponding guiding element (5,7),
- whereby in case of a guiding at both sides the arms (8) are pushed away by means of spring force within the guiding elements (5,7) from a limiting area (13) which extends perpendicularly to the front area (4) and perpendicularly to the rear area (6),
- whereby in case of a guiding at both sides both ends of these arms (8) are designed as abutments which serve as limiting contour, and whereby these abutments have matching designed counter pieces (12) in the respective end area of the corresponding guiding element (5,7),
- either a coulisse (14), also termed cardioid, or a deflecting lever (15), also termed coulisse pin, or a disk (16) with a cam is mounted to the first element (1) or to the second element (2), or a coulisse (14) or a deflecting lever (15) or a disk (16) with a cam is supported for rotation in the first element (1) or in the second element (2),
- the first element (1) forms in the slid out or moved out position together with the completely swung out arms (8) the receiving and holding areas (17) for the said receptacles,
- the said second element (2) and the said third element(3) include matching lateral guiding elements (18, 18a) and matching arresting areas (19,19a),
- either a deflecting lever (20) or a coulisse (21) or a disk (22) with a cam is supported for rotation at the third element (3), or a deflecting lever (20) or a coulisse (21) or a disk (22) with a cam is mounted in the third element (3), whereby the respective deflecting lever (15;20) or the respective cam in the disk (16;22) engages into the respective coulisse (21;14), and whereby the field of traverse of the respective deflecting lever (15;20) or of the respective cam in the disk (16;22) is limited in a manner matching the respective opening in the coulisse (21;14), and
- such a spring (23) is mounted to the third element (3), which causes the complete or partial sliding out or moving out of the first and second elements (1,2) mounted together.

2. Device according to claim 1, characterized in that the first element (1) is mounted to the second element (2) by means of a profiled member, specifically a guideable profiled member with an arresting abutment, preferably a so called "dovetail"-guide.

3. Device according to one of the claims 1 to 2, characterized in that the front area (4) is structured as a blind or a covering cap.

4. Device according to one of the claims 1 to 3, characterized in that the front guiding elements (5) and/or the rear guiding elements (7) are structured as guiding pockets.

5. Device according to one of the claims 1 to 4, characterized in that the arms (8) have an oval contour, and are equipped preferably on the side facing inwards, inclusive the corresponding areas (28) in the first element (1), with elastic lips (24).

6. Device according to one of the claims 1 to 5, characterized in that the said rotatable supports are attained by bolts, pegs or shafts.

7. Device according to one of the claims 1 to 6, characterized in that the springs (10) are pressure or leg springs.

8. Device according to one of the claims 1 to 7, characterized in that the guiding elements (18) in the second element (2) and in the third element (3) are matched guiding profile members.

9. Device according to one of the claims 1 to 8, characterized in that the spring (23) is a pressure spring which preferably is guided by means of a pin (25), whereby such a pressure spring is preferred, which allows the complete sliding out or moving out of the first and second elements (1,2) mounted together.

10. Device according to one of the claims 1 to 9, characterized in that the first element (1) includes at least one sliding ledge (26) in the visible area and/or at least one stabilizing rib (27) in the not visible area, also termed rear area, whereby these sliding ledges (26) and stabilizing ribs (27) extend in the direction of the function.

## Revendications

1. Dispositif en forme de cassette pour recevoir/maintenir des récipients, en particulier des bouteilles, des boîtes, des coupes, des verres, dans lequel
- un premier élément (1) réalisé sous la forme d'un support est fixé, de manière à pouvoir être monté et démonté, à un deuxième élément (2) réalisé sous la forme d'une glissière,
- ledit premier élément (1) et ledit deuxième élément (2), lorsqu'ils sont montés, peuvent être insérés ou engagés dans un troisième élément (3) réalisé sous la forme d'un boîtier et peuvent être également retirés ou dégagés de ce troisième élément (3),
- ce premier élément (1) présente une zone frontale (4), également appelée zone de manipulation/de recouvrement,
- des éléments de guidage antérieurs (5) sont présents dans cette zone frontale (4) et/ou des éléments de guidage arrières (7) sont présents du côté (6) opposé à cette zone frontale (4), la zone dite arrière,
- un ou deux bras (8) sont guidés d'un seul côté dans les éléments de guidage antérieurs (5) ou dans les éléments de guidage arrières (7), ou sont guidés des deux côtés à la fois dans les éléments de guidage antérieurs (5) et dans les éléments de guidage arrières (7),
- dans le cas d'un guidage unilatéral de ces bras (8), la zone d'extrémité (9) non guidée du bras (8) concerné est montée à rotation dans le premier élément (1),
- dans le cas d'un guidage unilatéral, chacun de ces bras (8) est rattaché à un ressort (10), fixé au premier élément (1), tel qu'il réalise le pivotement complet du bras (8) concerné,
- dans le cas d'un guidage unilatéral, chacun de ces bras (8) est réalisé, dans une première zone partielle (11) en forme de butée qui sert de contour de limitation, cette butée ayant une contre-pièce (12), adaptée en conséquence, à l'extrémité correspondante de l'élément de guidage (5, 7) concerné,
- dans le cas d'un guidage bilatéral, les bras (8) sont, à partir d'une zone limite (13) perpendiculaire à la zone frontale (4) et perpendiculaire à la zone arrière (6), repoussés à l'intérieur des éléments de guidage (5, 7) par effet de ressort,
- dans le cas d'un guidage bilatéral, les deux extrémités de ces bras (8) sont réalisées sous la forme de butées qui servent de contour de limitation, ces butées ayant des contre-pièces (12), adaptées en conséquence, à l'extrémité correspondante de l'élément de guidage (5, 7) concerné,
- au premier élément (1) ou au deuxième élément (2) est fixé soit une coulisse (14), également appelée cardioïde, ou un levier de renvoi (15), également appelé tige de coulisse, ou un disque (16) à cames, ou dans le premier élément (1) ou dans le deuxième élément (2) est monté à rotation une coulisse (14) ou un levier de renvoi (15) ou un disque (16) à cames,
- le premier élément (1), une fois retiré ou dégagé, forme avec les bras (8), quand ils ont pivoté complètement, les zones (17) destinées à recevoir et à maintenir les récipients précités,
- ledit deuxième élément (2) et ledit troisième élément (3) présentent des éléments de guidage latéraux (18, 18a) adaptés l'un à l'autre et des points d'arrêt (19, 19a) adaptés l'un à l'autre,
- au troisième élément (3) est monté à rotation soit un levier de renvoi (20) soit une coulisse (21) soit un disque (22) à cames, ou dans le troisième élément (3) est fixé un levier de renvoi (20) ou une coulisse (21) ou un disque (22) à cames, le levier de renvoi (15; 20) concerné ou la came concernée du disque (16; 22) s'engage dans la coulisse (21; 14) correspondante et la plage de pivotement du levier de renvoi (15; 20) concerné ou la came concernée du disque (16; 22) est limitée d'une manière adaptée à l'ouverture correspondante dans la coulisse (21; 14), et
- au troisième élément (3) est fixé un ressort (23) tel qu'il réalise le retrait ou le dégagement complet ou partiel des premier et deuxième éléments (1,2) montés côte à côte.

2. Dispositif selon la revendication 1, caractérisé en ce que le premier élément (1) est relié au deuxième élément (2) au moyen d'un profilé, en particulier un profilé guidable avec butée d'arrêt, de préférence une coulisse dite en "queue d'aronde".

3. Dispositif selon l'une quelconque des revendications 1 à 2, caractérisé en ce que la zone frontale (4) est réalisée sous la forme d'un panneau ou d'un couvercle.

4. Dispositif selon l'une quelconque des revendications 1 à 3, caractérisé en ce que les éléments de guidage antérieurs (5) et/ou les éléments de guidage arrières (7) sont réalisés sous la forme de poches de guidage.

5. Dispositif selon l'une quelconque des revendications 1 à 4, caractérisé en ce que les bras (8) présentent un contour ovale et de préférence sont équipés de lèvres élastiques (24), sur le côté orienté vers l'intérieur, y compris les endroits correspondants (28) du premier élément (1).

6. Dispositif selon l'une quelconque des revendications 1 à 5, caractérisé en ce que les montages à rotation précités sont réalisés au moyen de boulons, de pivots ou d'arbres.

7. Dispositif selon l'une quelconque des revendications 1 à 6, caractérisé en ce que les ressorts (10) sont des ressorts à pression ou des ressorts à branches.

8. Dispositif selon l'une quelconque des revendications 1 à 7, caractérisé en que les éléments de guidage (18) dans le deuxième élément (2) et dans le troisième élément (3) sont des profilés de guidage adaptés l'un à l'autre.

9. Dispositif selon l'une quelconque des revendications 1 à 8, caractérisé en ce que le ressort (23) est un ressort à pression qui est guidé de préférence au moyen d'une tige (25), le ressort à pression préféré étant tel qu'il permet le retrait ou le dégagement complet des premier et deuxième éléments (1, 2) montés côte à côte.

10. Dispositif selon l'une quelconque des revendications 1 à 9, caractérisé en ce que le premier élément (1) présente au moins une nervure de glissement (26) dans la zone visible et/ou au moins une nervure de stabilisation (27) dans la zone non visible, également appelée dos, ces nervures de glissement (26) et ces nervures de stabilisation (27) étant disposées dans le sens de fonctionnement.
